# EUROPEAN PATENT APPLICATION

(11) **EP 4 360 751 A1**
(43) Date of publication of application: **01.05.2024**
(21) Application number: 22204284.8
(22) Date of filing: 28.10.2022
(51) Int. Cl.: B01J 20/22, B01J 20/30, B01D 53/26, B01D 53/02

(54) **METHOD FOR PRODUCING OF A METAL ORGANIC FRAMEWORK, THE METAL ORGANIC FRAMEWORK OBTAINABLE BY SAID METHOD AND ITS USE**

(71) Applicant: Calistair SAS, 77000 Vaux-le-Pénil (FR)
(72) Inventor: Taranto, Jérôme, Vaux-le-Pénil (FR); Carvalho, Alexandre, Vaux-le-Pénil (FR); Golamaully, Azdeen, Vaux-le-Pénil (FR)
(74) Representative: Kröncke, Rolf

(57) **Abstract**

The present invention relates in a first aspect to a method producing of metal organic framework (MOF) with recycling of organic solvents containing water, in particular, the reuse of mother liquid obtained in this process, composed of water and polar organic solvent in the further production process. In addition, the metal organic framework obtainable by the method according to the present inventions is provided. Moreover, the use of the metal organic framework according to the present invention in particular for gas separation, capture and storage as well as sensors is described.

## Description

The present invention relates in a first aspect to a method producing of metal organic framework (MOF) with recycling of organic solvents containing water, in particular, the reuse of mother liquid obtained in this process, composed of water and polar organic solvent in the further production process. In addition, the metal organic framework obtainable by the method according to the present inventions is provided. Moreover, the use of the metal organic framework according to the present invention in particular for gas separation, capture and storage as well as sensors is described.

### Prior Art

The adsorption of harmful substances from environment is still a substantial strategy since it operates under mild conditions, requires low investment and do not release toxic by-products. Of course, adsorption of harmful substances requires effective adsorbents. Today suitable materials for adsorption include porous materials. In particular, presently zeolites as well as activated carbon is widely applied. In recent years, a new class of porous crystalline materials has been described. Namely the so called metal-organic-frameworks (MOFs) have been successfully applied for the removal of hazardous substances. MOFs are obtained by the coordination bond between metal ions or clusters and organic linkers and the synthesis can be done via various methods. MOFs are hybrid coordination structures formed by metal clusters comprising metal ions coordinated by multi-functional organic ligands. MOFs are in the form of 1-, 2- or 3-dimensional structures that can be highly porous.

Typical methods of its preparation include hydrothermal treatment, microwave irradiation, mechanochemical conversion and dry gel conversion wherein the starting materials, the metal e.g. in form of metal salts are brought into contact with the organic linker and are reacted with each other forming the respective frameworks accordingly. A main issue in the MOF preparation being still a bottleneck due to the high cost of production and use of harmful solvents, such as DMF is scaling up the production bringing the same to commercial production.

The chemical properties of the surface of the cavities present in the porous MOFs can be tailored using to traditional organic chemistry applied to the organic counter part of the MOF structure. Hence, MOF may allow to form host-guest MOF system as well as representing suitable systems for adsorption of compounds, in particular, fluids like gaseous components. MOFs have been discussed in various areas including gas storage, adsorption, gas separation, catalysis, drug storage and delivery, as well as luminescent and fluorescent materials, magnetic materials etc. The MOFs are advantageous over other known porous materials in the possibility to tailor the host-guess interaction by choosing the appropriate building blocks, the metal ion and organic ligands forming the MOF accordingly.

For example, WO 2016/000032 A1 describes host-guest metal organic framework systems. The document relates to a method for producing MOF having a framework that encapsulates a bio-molecule. In addition, an example of MOFs is the MOF-199. For example, Thuy Van Nguyen Thi et al 2013 Adv. Nat. Sci: Nanosci. Nanotechnol., 4035016, describes the synthesis of MOF-199 and application to CO₂ adsorption. The MOF-199 is a typical example of MOF described in the art so far suitable for adsorption of gaseous compounds, in particular harmful substances.

Moreover, WO 2018/065555 relates to metal organic frameworks, methods for their manufacture and use thereof. The MOF described therein has utility for storing and/or separating gases such as CH₄, CH₂, O₂, NH₃, Ar, CO, N₂ and C₂H₄ as well as toxic industrial gases and, in addition, warfare agents, such as sarin, mustard gas and derivatives thereof.

However, as mentioned, scaling up MOF preparation is still an issue. Therefore, there is an ongoing need for providing new methods for producing MOF, in particular, at low costs and avoiding harmful solvents. Further, from ecological and economic reasons, improvement of the production process is desired.

### Brief description of the present invention

In a first aspect, the present invention relates to a method for producing of metal organic framework (MOF) with recycling of solvents containing water comprising the steps of
a) providing a metal salt;
b) providing a recycled mother liquid of polar organic solvent containing water and adding an organic linker under stirring;
c) adding the metal salt to the mother liquid containing the organic linker under stirring and/or ultrasonication;
d) reacting under stirring and/or ultrasonication of the metal salt and the organic linker to obtain a MOF;
e) leaving the reaction solution separating the solid MOF from the mother liquid;
f) obtaining i) the separated solid MOF and ii) the mother liquid for reuse in step b).

The obtained solid MOF may undergo further purification by known methods like washing, etc.

In another embodiment, the present invention relates to a method for producing of metal organic frame work (MOF) with recycling of organic solvents containing water comprising the steps of
a) preparing a first solution of a metal salt in an aqueous solution and a polar organic solvent;
b) preparing a second solution of an organic linker in the same polar organic solvent as used in step a);
c) adding the first solution into the second solution under stirring and/or ultrasonication;
d) reacting the compounds of metal salt and organic linker under stirring and/or ultrasonication obtaining the MOF;
e) leaving the reaction solution allowing to settle the solid MOF;
f) obtaining i) the solid MOF, optionally by centrifugation or filtration which may be followed by a step of washing to remove impurities from the solid, and ii) the mother liquid for recycling and further use in the production of MOF and directing the recycled mother liquid to a reactor for admixing with the organic linker and metal ion source.

Moreover, the present inventions provides the metal organic framework obtainable by the method according to the present invention. Further, the present invention discloses the use of the MOF according to the present invention and obtainable according to the present invention for gas separation, capture and storage and as sensors. In particular, adsorption is possible for various components like gaseous hazardous components or odors including CO, etc. as well warfare gases like mustard gas, sarin, but also toxic industrial gases including aromatics but also sulfur dioxide etc.

### Brief description of the figures

Fig. 1: scheme of the process according to the present invention
Fig. 2: scheme of the first process cycle for producing MOF according to the present invention
Fig. 3: ethanol adsorption capacity over calistair catalyst, as described in WO 2021/130388 A1, commercial adsorbents (zeolites 5a, 13 and sodium y) and MOF based materials according to the present invention (MOF calistair - S1, MOF calistair S2, and MOF calistair - recycling medium.
Fig. 4: ethanol adsorption over MOF prepared according to the present invention and commercial adsorbent zeolite 13x under ambient air and dry air. Reaction conditions: room temperature, ambient pressure, ethanol concentration equal to 1500 ppm and 600 mg of adsorbent.
Fig. 5: adsorption capacity of commercial adsorbent zeolite 13x and MOF according to the present invention under ambient air for toluene, ethanol and MEK.
Figu. 6: uptake curve of MOF material according to the present invention for first cycle of ethanol adsorption and after cycles of toluene and MEK adsorption (reusability cycle of ethanol adsorption). Reaction conditions: room temperature (21°C), ambient pressure, ethanol concentration equal to 1500 ppm.

### Detailed description of the present invention

The present invention relates to a method for producing of metal organic framework (MOF) with recycling of solvents containing water comprising the steps of
a) providing a metal salt;
b) providing a recycled mother liquid of polar organic solvent containing water and adding an organic linker under stirring;
c) adding the metal salt to the mother liquid containing the organic linker under stirring and/or ultrasonication;
d) reacting under stirring and/or ultrasonication of the metal salt and the organic linker to obtain a MOF;
e) leaving the reaction solution separating the solid MOF from the mother liquid;
f) obtaining i) the separated solid MOF and ii) the mother liquid for reuse in step b).

As used herein, the term "polar solvents containing water" refers to solvents containing detectable amounts of water while water is not the main component of the solvent.

Typically, the amount of water in the polar solvent containing water is less than 10 weight%, like less than 5 weight%. In an embodiment, the mother liquid obtained after separation of the solid MOF represents the polar solvent containing water as defined herein.

The term "organic linker" as used herein refers to organic compounds having suitable substituents for multifunctional coordination of the metal ions, i. e. having more than one coordination site for the metal. Examples will be detailed below The term "polar organic solvent" as used herein refer to suitable, organic polar protic and aprotic solvents. Examples are detailed below.

In addition, as used herein, the term "mother liquid" or "recycled mother liquid" as used herein refers to a recycled polar solvent containing water which may contain at least one of organic linker, metal salt or MOF.

The present inventors recognized that a cost effective and environmental friendly process for producing MOF is possible by using relatively not expensive polar organic solvents and recycling of the liquids used for dispersing or dissolving the reactive partner forming the MOF. Namely, the mother liquid obtainable after separation of the solid MOF produced according to the present invention can be recycled and is suitable and sufficient for allowing reaction of the starting materials of the metal component and the organic linker component to produce MOF.

In particular, the first method cycle for producing the solid MOF comprises the following steps:
a) preparing a first solution of a metal salt in an aqueous solution and a polar organic solvent;
b) preparing a second solution of an organic linker in the same polar organic solvent as used in step a);
c) adding the first solution into the second solution under stirring and/or ultrasonication;
d) reacting the compounds of metal salt and organic linker under stirring and/or ultrasonication obtaining the MOF;
e) leaving the reaction solution allowing to settle the solid MOF;
f) obtaining i) the solid MOF, optionally by centrifugation or filtration, and ii) the mother liquid for recycling and further use in the production of MOF.

The mother liquid is stored in appropriate container or is directed directly to a reactor for admixing the mother liquid with organic linker. Thus, the next production cycle for MOF according to the present invention is started.

Namely, the mother liquid obtained after separating the solid MOF produced according to the present invention can be recycled and it is used further in the process according to the present invention for producing the metal organic framework with recycled water containing solvent of the process.

The recycled mother liquid for use according to the present invention is composed of the aqueous solution and polar organic solvent used initially for preparing a first solution of a metal salt combined with the same polar organic solvent of the second solution.

In an embodiment, e.g. in the second or further production cycle, the metal salt is added to the recycled mother liquid of polar solvent containing water containing the organic linker in solid form. The solid metal salt is dispersed under stirring and/or ultrasonication.

Also when preparing the first solution of the metal salt in an aqueous solution and polar organic solvent, the metal salt is added as solids and dissolved or dispersed in said solvent by suitable means, e.g. under stirring.

Suitable metal salts or suitable metal ions forming part of a MOF structure can be selected from group 1 through 16 metals of the EUPAC parallel table of the elements including actinides and lanthanides, and combinations thereof. The metal ion may be selected from Li+, Na+, K+, Rb+, Be2+, Mg2+, Ca2+, Sr2+, Ba2+, Se3+, Y3+, Ti4+, Zr4+, Hf4+, V5+, V4+, V3+, V2+, Nb3+, Nb5+, Ta5+, Cr6+, Cr3+, Mo6+, Mo3+, Mo+4, W6+, W3+, W4+ Mn4+, Mn3+, Mn2+, Re7+, Re2+, Fe3+, Fe2+, Ru4+, Ru3+, Ru2+, Os3+, Os2+, Co3+, Co2+, Rh3+, Rh2+, Rh+, Ir4+, Ir2+, Ir+, Ni2+, Pd4+, Pd2+, Pt4+, Pt2+, Cu2+, Cu+, Ag+, Au+, Zn2+, Cd2+, Hg2+, B3+, AI3+, Ga3+, In3+, TI3+, Si4+, Si2+ Ge4+, Ge2+, Sn4+, Sn2+, Pb4+, Pb2+, As5+, As3 +, Sb5+, Sb3+, Bi5+, Bi3+, La3+ ,Ce3+,Ce4+, Pr3+, Pr4+, Nd3+, Sm3+, Sm2+, Eu3+, Eu2+, Gd3+, Tb3+, Tb4+, Dy3+, Ho3+, Er3+ , Tm3+, Yb3+, Yb2+ , Lu3+, Th4+, U6+; U5+, U4+, U3+, and combination thereof.

In an embodiment, the metal is cupper (II) salt or a metal salt containing CU. In an embodiment, the cupper (II) salt is at least one of copper nitrate, copper acetate, copper sulfate and copper fluoride.

Of course, other metal ions may be present including zirconium etc. Typically, tetrahedral coordinated transition metal ions like Fe, Co, Cu, or Zn, may be used accordingly. These tetrahedral coordinated transition metal ions allow to form frameworks with suitable organic linkers, for example linkers or ligands as described below, resulting in three dimensional porous solid structures accordingly.

Suitable salts include nitrate, acetate and fluoride salts but may also be coordinated by organic ligands selected from oxalic acid, malonic acid, succinic acid, glutaric acid, phthalic acid, isophthalic acid, terephthalic acid, citric acid, trimesic acid, 1,2,3-triazole, pyrrodiazole, or squaric acid.

As said, the metal ions or metal salts are dispersed or dissolved in a solvent being a mixture of water and organic solvent. For example, the solvent mixture may comprises equal amounts of water, like deionized water, and organic solvent, like ethanol, or other alcohols. Thus, the first solution according to the method of the present invention is formed.

In the further embodiment of the method according to the present invention, namely, wherein recycled mother liquid is used, the metal ions typically in form of solid metal salts are added to the mother liquid containing the organic linker under stirring and/or ultrasonication.

The dissolution or dispersion may be conducted at temperature higher than 10°C. Typically, the metal ions e.g. in form of metal salts are added at temperature higher than 10°C or dispersed at temperature higher than 10°C accordingly.

For example, suitable organic ligands include those ligands listed in WO 2010/075610 or WO 2016/000032 A1. The content of which are include herein in their entirety. Example of organic ligand precursors include, but are not limited to organic ligands of the kind described herein that coordinate the metal ion clusters in the MOF framework. The organic ligands organic linker or organic ligand, which is used herein interchangeably include molecules that have at least two chemical moieties capable of coordinating a metal ion. In some embodiments, these groups comprise carboxylates, phosphonates, sulfonates, N- heterocyclic groups, and combinations thereof.

Suitable organic ligands include those ligands listed in WO 2010/075610 and Filipe A, et.al., Chemical Society Reviews, 2012, Volume 41, pages 1088-1110, the contents: of which are included herein in their entirety.

Examples of organic ligand precursors include, but are not limited to, 4,4,,4"-[benzene-1,3,5-triyl-tris(ethyne-2,1-diyl)]tribenzoate, biphenyl-4,4'-dicarboxylate, 4,4,,4"- [benzene- 1,3,5-triyl-tris(benzene-4,1-diyl)]tribenzoate, 1,3,5-benzenetribenzoate, 1,4- benzenedicarboxylate, benzene-1,3,5-tris(1H-tetrazole), 1 ,3,5- benzenedicarboxylic, acid, terephthalic acid, imidazole, benzimidazole, 2-nitroimidazole, 2-methylimidazole (Hmlm), 2-ethylimidazole, 5-chloro benzimidazole, purine, fumaric acid, α-cydodextrin, β- cyclodextrin, γ-cyclodextrin 1,4-Bis(1-imidazolyl)benzene), 4,4,-Bispyridyl, 1 ,4- Diazabicyclo[2.2,2]octane, 2-amino-1,4-benzenedicarboxylic, 2-amino-1,4-benzenedicarboxylic acid, 4,4'-Azobenzenedicarboxylate, 4,4'-Azobenzenedicarboxylic acid, Aniline-2,4,6-tribenzoate, Amiline-2,4,6-tribenzic acid, Biphenyl-4,4'-dicarboxylic acid, 1,1'-Biphenyl-2,2',6,6'-tetracarboxylate, 1,1'-Biphenyl-2,2',6,6'-tetracarboxylic acid, 2,2'-Bipyridyl-5,5' -dicarboxylate, 2,2 -Bipyridyl-5,5'-dicarboxylic acid, 1,3,5-Tris(4-carboxyphenyl)benzene, 1,3,5-Tris(4-carboxylatephenyl)benzene, 1 ,3,5-Benzenetricarboxylate, 2,5-Dihydrpxy-1 ,4-benzenedicarboxylate, 2,5-Dihydroxy- 1 ,4-benzenedicarboxylic acid, 2,5-Dirnethoxy-1 ,4-benzenediearboxylate, 2,5-Dimethoxy-i,4-benzenedicarboxylatec acid, 1 ,4-Naphthalenedicarboxylate, 1,4-Naphthalenedicarboxylic acid, 1,3-Naphthalenedicarboxylate, 1,3-Naphthalenedicarboxylic, acid, 1,7-Naphthalenedicarboxylate, 1,7-Naphthalenedicarboxylic acid, 2,6-Naphthalenedicarboxylate, 2,6-Naphthalenedicarboxylic acid, 1,5-Naphthalenedicarboxylate, 1,5-Naphthalenedicarboxylic acid, 2,7- Naphthalenedicarboxylate, 2,7-Naphthalenedicarboxylic acid, 4,4',4',-Nitrilotrisbenzoate, 4,4',4"-Nitrilotrisbenzoic acid, 2,4,6-Tris(2,5-dicarboxylphenylamino)-1,3,5-triazine.2,4,6-Tris(2,5-dicarboxylatephenylamino)-1,3,5-triazine, 1,3,6.8-Tetrakis(4- carboxyphenyl)pyrene, 1,3,6,8-Tetrakis(4-carboxylatephenyl)pyrene, 1,2,4,5-Tetrakis(4-carboxyphenyl)benzene, 1,2,4,5-Tetrakis(4-carboxylatephenyl)benzene, 5,10,15,20-Tetrakis(4-carboxyphenyl)porphyrin, 5,10,15,20-Tetrakis(4-carboxylatephenyl)porphyrin, adenine, adeninate, fumarate, 1,2,4,5-benzenetetracarboxylate, 1,4,5-benzenetetracarboxylic acid, 1,3,5-benzenetribenzoic acid, 3,-amino-1,5-benzenedicarboxylic acid, 3-amino- 1,5-benzenedicarboxylate, 1,3-benzenedicarboxylic acid, 1 ,3 -benzenedicarboxylate, 4',4',4"-[benzene- 1 ,3 ,5 - triyl-tris(ethyne-2, 1 - diyl)]tribenzoic acid, 4,4',4"-[benzene-1,3,5-triyl-tris(benzene-4,1-diyl)]tribenzoic acid, oxalic acid, oxalate, fumaric acid, fumarate, maleic acid, maleate, trans.trans-muconic acid, trans,trans,-muconate, cis,trans-muconic acid, cis,trans-muconate, cis,cis-muconic acid, cis,cis-muconate, pyrazole, 2,5-dimethylpyrazole, 1,2,4-triazole, 3,5-dimethyl-1,2,4-triazole, pyrazine, 2,5-dimethylpyrazine, hexamethylenetetramine, nicotinic acid, nicotinate, isonicotinic acid, isonicotinate, 4-(3,5-dimethyl-1H-pyrazole)-benzoic acid, 2,5- furandicarboxylic acid, 2,5-furandicarboxylate, 3,5-dimethyl-4-carboxypyrazole, 3,5- dimethyl-4-carboxylatepyrazole, 4-(3,5-dimethyl-1H-pyrazol-4-yl)-benzoic acid, 4-(3,5- dimethyl-1H-pyrazol-4-yl)-benzoate, and mixtures thereof.

Of course, the organic linker or organic ligands may be functionalized further dependent on the desired use. Suitable functionalities are described e. g. in Zhang, et. al. (2019). Applied Surface Science, 497, 143815. https://doi.org/10.1016/j. apsusc.2019.143815

A preferred organic linker is e.g. trimesic acid also known as benzene-1,3, 5-tricarboxylic acid..

In addition, the polar organic solvent is typically an alcohol, like a C1 - C4 alcohol. In an embodiment, the organic solvent is ethanol while in another embodiment the water is a deionized water.

In an embodiment, the aqueous solution and polar organic solvent is a mixture of water and ethanol.

Also the mother liquid to be used according to the present invention is typically composed of the polar organic solvent with water further containing remaining starting materials, like organic linker or metal ions or metal salt in solid form or dissolved therein. Typically, the mother liquid contains above 50 % polar organic solvent, like above 50 volume-% ethanol and minor percentage of water.

The mother liquid before reuse in further process cycles may be centrifuged or filtrated, thus, removing remaining solids.

The method according to the present invention using the recycled mother liquid wherein the metal source and organic linker is added under stirring. The addition and dispersion or dissolution of the metal source and organic linker in the mother liquid is under stirring and may be conducted at elevated temperature or at room temperature. Also the process may be conducted under ambient or high pressure.

In an embodiment of the present invention after adding the organic linker to the mother liquid, the temperature can be increased e.g. up to 130°C, e.g. upt to 70°C, like up to 60°C in order to dissolve the organic linker rapidly.

In the next step, the metal ions, e.g. the metal salts are added to the mother liquid containing the dissolved organic linker under stirring and/or ultrasonication.

After bringing the metal ions into contact with the organic linker, the solution is reacted under stirring and/or ultrasonication to obtain the metal organic framework according to the present invention.

For example, the reaction is conducted for a sufficient time under stirring to obtain solid MOF present in the mother liquid. After reaction, the reaction solution is left allowing to settle the solid MOF. Thereafter, the solid MOF is separated from the mother liquid whereby separation may be effected by simple settlement or may be supported by centrifugation or filtration.

The mother liquid is obtained separately for further use in the production of MOF accordingly.

In the first process cycle of producing MOF, the first solution is prepared as described above while the second solution, namely the organic linker solution is prepared by adding the organic linker into the polar organic solvent under stirring to dissolve the same.

After preparing each of the first and second solution, the first solution is poured into the second solution under stirring and/or ultrasonication.

The reaction is performed for a sufficient time from 10°C temperature or elevated temperature (140°C), e.g. under ambient or high pressure under stirring and/or ultrasonication. Depending on the source of energy for the reaction, the temperature may increase, thus, controlled temperature system needs to be applied in order to maintain the reaction solution at room temperature accordingly.

The prepared solid MOF is separated from the mother liquid and the mother liquid is stored or used immediately in the further process cycles. The obtained solid MOF may be washed further, e.g. using the polar organic solvent and dried thereafter.

In an embodiment, the ratio of the metal salt and the organic linker is in between 0.9 to 3, like 0.9 to 2.0.

A skilled person can easily determine the ratio suitable for the desired purpose accordingly.

The MOF obtained demonstrates high adsorption capacity also when comparing the same with well-known commercial adsorption as shown below.

In particular, the MOF obtainable according to the present invention demonstrates suitable adsorption capacity for fluids including hazardous gases like toxic components or warfare gases.

Hence, the MOF according to the present invention is suitable for various applications. Namely, the MOF according to the present invention can be used in various applications and, in addition, the MOF can be provided in various embodiments.

An advantage of the MOF according to the present invention is that the MOF can be provided in form of a slurry or other removable form. That is, devices containing the MOF for adsorption can be provided containing the MOF as adsorption material whereby the MOF material can be exchanged if necessary. Moreover, the MOF allows to provide adsorption material in individualized form. For example, the MOF can be adapted to the requirements of the device with respect to form of the device and, thus, the shaping and design of the MOF can be individualized accordingly. Moreover, the MOF can be provided in form e.g. of pellets, granules or the like as filler of devices accordingly.

Suitable applications include application for gas separation, capture and storage but also as sensors.

Further, the MOF can be used for adsorption of harmful substances from the environment. This is also true for warfare gases, that is, using the MOF in gas masks or other protective closing or protective gear. In addition, the MOF may be immobilized on conventional carrier materials, like ceramic materials, honeycomb structures and filter structures and the like allowing purification of the liquids from the environment accordingly.

In an embodiment, the MOF are used for adsorbing polar and non-polar compounds like ethanol, MEK and toluene.

The present invention will be described further by referring to the figures attached herewith and by way of examples without limiting the invention thereto.

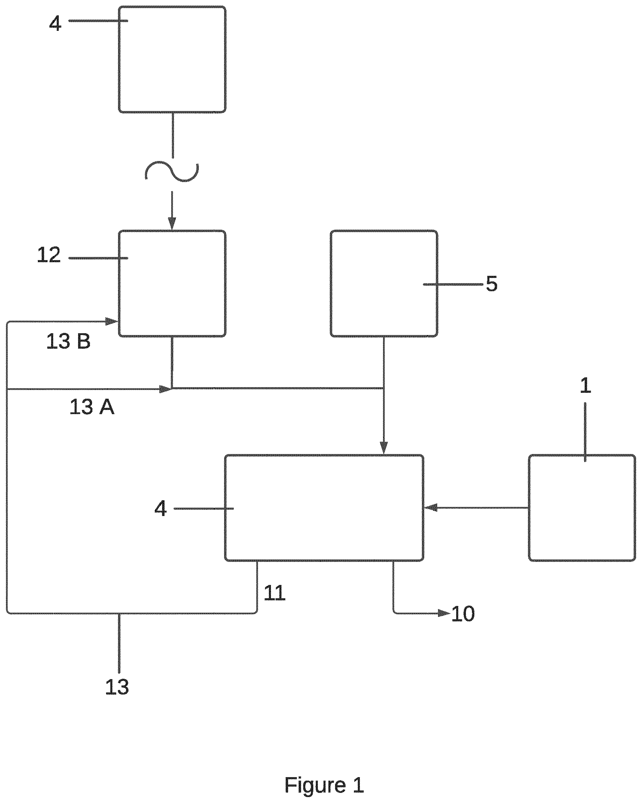

In figure 1, the process is summarized in a flowchart. Mother liquid (ML) 4 is obtained from a previous cycle of the process and is stored in container 12, Container 5 contains the organic linker. As described, ML and organic linker are admixed in reactor 4 under stirring. From storage container 1 the metal salt is added to the ML containing the organic linker present in reactor 4. The reaction takes place under stirring and/or ulltrasonication. After settling the solid MOF obtained in the reaction, ML11 is separated as well as solid MOF 10. The ML 11 is directed via conduit 13 either into the storage container 12, conduit 13A or directly into the reactor, conduit 13B.

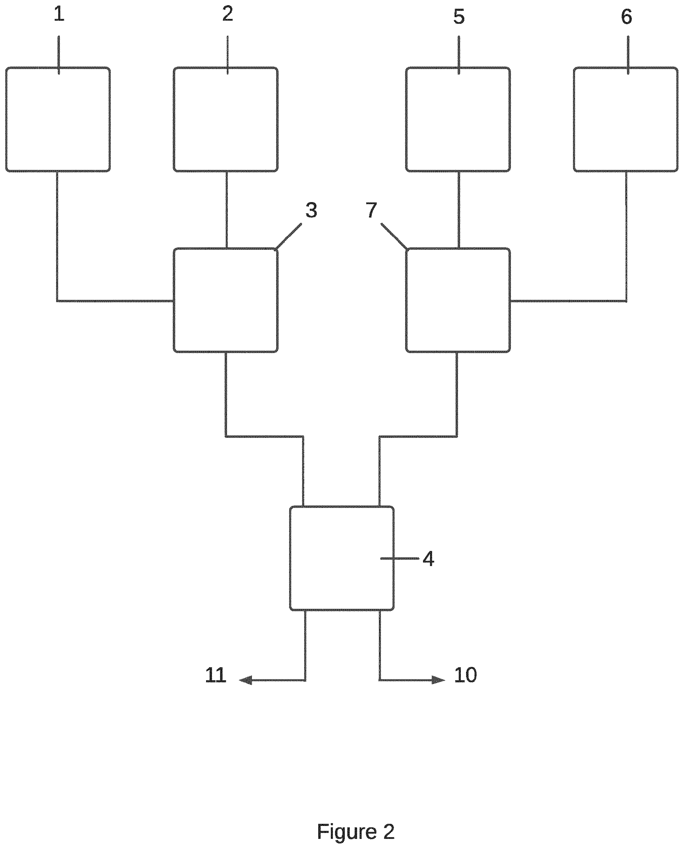

In figure 2 the first process cycle is summarized in a flow chart. Metal salt is lead into the mixing vessel 3 form storage container 1 and is dissolved in aqueous solution of water and ethanol supplied from container 2 to obtain the first solution of an aqueous solvent dissolved the metal salt therein. On the other hand, organic linker is supplied from storage container 5 and admixed with ethanol form container 6 in a second missing vessel to obtain the second solution of organic linker dissolved in the polar organic solvent. The two solutions are admixed in reactor 4 by adding the first solution in the second solution. The components are allowed to react as described.

After settlement, the solid MOF 10 is obtained as well as the solvent representing the ML 11 which may be directed to the storage container or which may be applied directly into the reactor of the next process cycle.

### Examples

The MOF-199 was synthetized under stirring (S1) and ultrasonication (S2) at ambient temperature and pressure. In a typical synthesis, the reaction between the ethanolic solution of copper nitrate hemi pentahydrate and the ethanolic solution of benzene-1,3,5-tricarboxylic acid was executed for 20 min. Then, the solid was separated from the mother liquor by centrifugation or filtration, washed with an organic solvent and left to dry at ambient temperature or 65-85°C at atmospheric pressure. The MOF materials were named MOF Calistair - S1 and MOF Calistair - S2. The solvent medium obtained from S1 or S2 was reused to produce a new batch of MOF. This material is named MOF Calistair - Recycling medium.

The method is summarized as follows:
Before adsorption experiments, the MOF samples are activated at 165°C under vacuum.

### Adsorption experiments

The MOF based materials prepared above and commercial adsorbents (Zeolites 5A, 13X and NaY) bought from Sigma-Aldrich were evaluated by ranking the adsorption capacities. Ethanol, toluene and MEK were pumped to the reactor system by the vapor generation system. Gas concentration was measured on-line by a microGC Agilent 990.

### Adsorption capacity

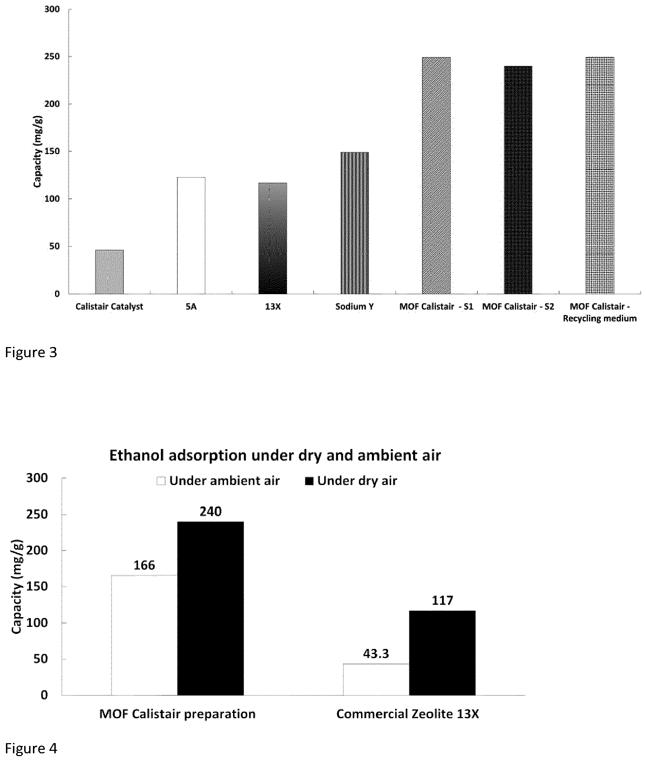

The objective of this study was to evaluate the adsorption behaviour of polar and non-polar compounds on commercial adsorbents and on the MOF based materials prepared above. In order to determine the real interaction adsorbate-adsorbent, the first experiment was performed by using the pollutant (in this case, ethanol) diluted in dry air. The Calistair Catalyst, a catalyst described in WO 2021/130388 A1 which is incorporated herein by reference, was evaluated since adsorption is a surface phenomenon that plays an important role in the catalytic activity. Figure 3 shows the adsorption capacity of these materials.

The MOF based materials according to the present invention displayed higher adsorption capacity than commercial adsorbents. The different synthesis procedure was able to supply MOF based materials with similar adsorption capacity. Interestingly, the reutilization of the reaction medium from the first batch can be applied to produce a new MOF batch.

In order to elucidate the effect of ambient air on the adsorption capacity, the MOF according to the present invention and one commercial adsorbent (Zeolite 13X) were tested under ambient air condition. Figure 4 shows the adsorption ability of both adsorbents under dry air and ambient air.

It is possible to observe the interference of water and carbon dioxide with the adsorption of the pollutant. The adsorption site competition caused the decrease of the process efficiency (higher for Zeolite 13X (63%) and lower for MOF (31%). Note, however, that the MOF under ambient air demonstrated higher capacity than commercial 13X under dry air.

| **MOF-199 composite synthesis procedure** | |
|---|---|
| 1) | Prepare Solution 1 containing 24 mmol cupric nitrate hemi(pentahydrate) in 50 mL to 100 mL of solvent mixture (50%vol of deionized water and absolute ethanol). Leave under stirring till complete dissolution |
| 2) | Prepare organic linker solution (Solution 2): 12 mmol of benzene-1,3,5-tricarboxylic acid (trimesic acid) in 100 mL of absolute ethanol. Leave under stirring for 15 min. |
| 3) | Rapid addition of Solution 1 into Solution 2 under stirring (S1) or ultrasonication (S2). The metal to organic linker molar ratio equal to 2.0. |
| 4) | Perform reaction for 20 min to 60 min under atmospheric pressure and room temperature. |
| 5) | At the end of reaction, leave the reaction solution to decant overnight. |
| 6) | Perform centrifugation (5500rpm, 15min) or filtration to recover the MOF solid. Mother liquid (ML) is obtained from this step. |
| 7) | Wash the MOF solid with 250mL of ethanol. This step can be executed by centrifugation or filtration. |
| 8) | Dry under room temperature or 65-85°C at atmospheric pressure. Then, activation procedure described on Page 13. |

| **MOF synthesis with reutilization of polar solvent containing water** | |
|---|---|
| 1) | Filter the mother liquid (ML) obtained in Step 5. |
| 2) | Put the ML under stirring (600rpm). |
| 3) | Add amount of organic linker in ML considering the metal to linker molar ratio of 2.0. Leave under stirring and increase the temperature to 60°C in order to rapidly dissolve the organic linker. |
| 4) | Add the amount of copper nitrate hemi(penta) hydrated into ML right after completely dissolution of organic linker. |
| 5) | Perform the reaction under stirring for 60 min. |
| *Repeat steps* 6,7 *and* 8 of *MOF synthesis procedure* | |

Based on the results shown in figure 4, a further aspect relates to a combination of the MOF material according to the present invention with drying agents and/or CO₂ capture adsorbents to improve the adsorbent selectivity. Namely, the MOF material according to the present invention can be combined with known drying agents and CO₂ capture adsorbents to improve the ethanol adsorption.

Suitable examples include silica or hydrophilic materials like TiO₂. Specific drying agents include anhydrous calcium chloride, silica gel and calcium oxide. For example, it is possible to increase adsorption of toluene more than two times with the combination of MOF and silica gel with a mass ratio of 1.4 silica gel to MOF.

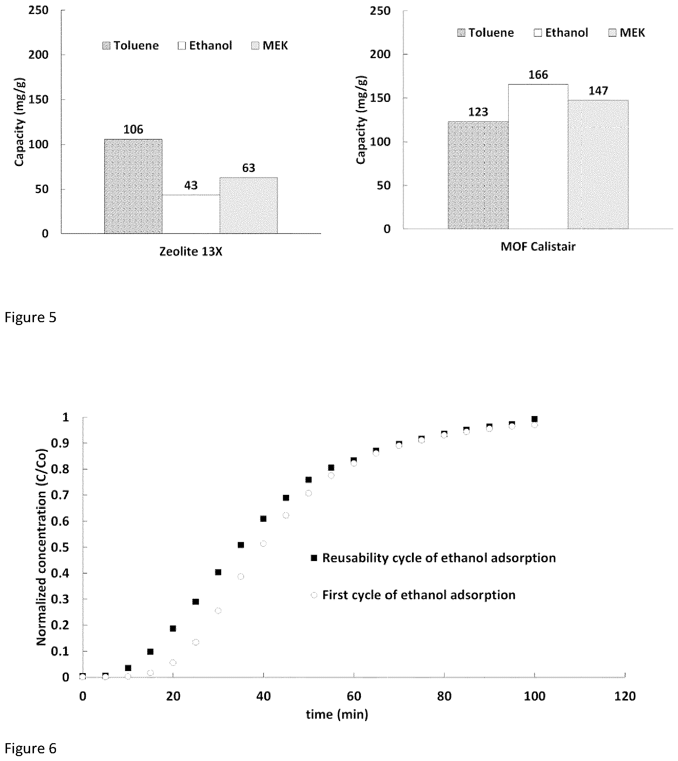

The adsorption of different gases was also tested. Figure 5 displays the adsorption capacity of different gases over the commercial Zeolite 13X and MOF prepared at Calistair. Note that the adsorption capacity of MOF Calistair remains superior to the capacity of a commercial adsorbent under ambient air.

### Reusability of MOF material

The reusability of any adsorbent material is an important feature for its sustainable application. In this study, the reusability of the MOF Calistair was elucidated after cycles of adsorption of ethanol, MEK and toluene. For the sake of comparison, the first adsorption cycle using ethanol informed the total adsorption capacity of the MOF material. Then, after cycles of the cited gases, the first pollutant was again verified to determine the MOF deactivation.

Figure 6 displays the breakthrough curve of MOF material during the first and after cycles of toluene and MEK adsorption.

No significant different was detected between the first and the reusability cycle. In fact, only 12% of reduction was noted.

### Conclusion

A facile synthesis procedure without the use of harmful solvents was created to obtain MOF based materials. It is possible to modify the MOF composition and still obtain higher adsorption capacity in comparison with well-known commercial adsorbents. Hence, the procedure can be applied to prepare MOF composites for applications beyond adsorption (e.g., gas sensing and catalytic oxidation). Moreover, the reutilization of the reaction medium turns possible to improve the economical aspect of the MOF synthesis scale up. The use of drying agents and CO₂ adsorbents in a column bed configuration-together with the MOF material improves the adsorption capacity.

### Reference signs:

- 1: storage container metal salt
- 2: storage container water and ethanol
- 3: mixing vessel
- 4: reactor
- 5: storage container organic linker
- 6: ethanol
- 7: mixing vessel
- 10: solid MOF
- 11: mother liquid
- 12: storage container mother liquid
- 13, 13A, 13B: conduit

## Claims

1. A method for producing of metal organic framework (MOF) with recycling of solvents containing water comprising the steps of
a) providing a metal salt;
b) providing a recycled mother liquid of polar organic solvent containing water and adding an organic linker under stirring;
c) adding the metal salt to the mother liquid containing the organic linker under stirring and/or ultrasonication;
d) reacting under stirring and/or ultrasonication of the metal salt and the organic linker to obtain a MOF;
e) leaving the reaction solution separating the solid MOF from the mother liquid;
f) obtaining i) the separated solid MOF and ii) the mother liquid for reuse in step b).

2. A method for producing of metal organic frame work (MOF) with recycling of water containing solvents comprising the steps of
a) preparing a first solution of a metal salt in an aqueous solution and a polar organic solvent;
b) preparing a second solution of an organic linker in the same polar organic solvent as used in step a);
c) adding the first solution into the second solution under stirring and/or ultrasonication;
d) reacting the compounds of metal salt and organic linker under stirring and/or ultrasonication obtaining the MOF;
e) leaving the reaction solution allowing to settle the solid MOF;
f) obtaining i) the solid MOF, optionally by centrifugation or filtration, and ii) the mother liquid for recycling and further use in the production of MOF.

3. The method according to claim 1 or 2 wherein the metal is a copper (II) salt or a metal salt containing Cu, in particular, the copper (II) salt is at least one of copper nitrate, copper acetate, copper sulfate and copper fluoride.

4. The method according to any one of the preceding claims wherein the polar organic solvent is a C₁ to C₄ alcohol, in particular, ethanol.

5. The method according to any one of the preceding claims wherein the aqueous solution and a polar solvent is a mixture of water and ethanol.

6. The method according to any one of the preceding claims wherein the water is a deionized water.

7. The method according to any one of the preceding claims wherein the mother liquid is centrifuged or filtrated before reuse for dissolving the organic linker.

8. The method according to any one of claims 1, 3 to 7 wherein the organic linker is dissolved in the mother liquid under stirring and under elevated temperature up to 70°C, like up to 60°C.

9. The method according to any one of the preceding claims wherein the molar ratio of the metal salt and the organic linker is in between 0.9 to 3, in particular 0.9 and 2.0.

10. The metal organic framework obtainable by a method according to any one of the preceding claims.

11. The MOF according to claim 10 being in form of a slurry or other removable form, or being in an individualized form.

12. The use of the MOF according to the any one of claims 10 to 11 for i) gas separation, capture and storage and as sensors and/or ii) for adsorption of polar and non-polar compounds, in particular, ethanol, MEK and toluene.

13. The use of the MOF according to claim 12 for adsorption of harmful substances from environment, in particular, in gas masks and immobilized on ceramics materials, honeycomb structure and filters.

14. The method organic framework obtainable by a method according to any one of claims 1 to 9 or according to claim 10 in combination with a drying agent and/or CO₂ capture adsorbent.

15. The combination of MOF and drying agent and/or CO₂ capture adsorbent according to claim 16, wherein the drying agent is selected from silica gel and anhydrous calcium chloride.
